# EUROPEAN PATENT SPECIFICATION

(11) **EP 1 439 747 B1**
(45) Date of publication and mention of the grant of the patent: **02.07.2008**
(21) Application number: 02774970.4
(22) Date of filing: 04.11.2002
(51) Int. Cl.: A01G 9/14, A01G 9/24, A01G 31/00, A23K 1/00

(54) **GROWING SYSTEM**
ZUCHTANLAGE
SYSTEME DE CULTURE

(30) Priority: 02.11.2001 GB 0126418
(43) Date of publication of application: 28.07.2004
(73) Proprietor: Unigro Limited, Sevenoaks, Kent TN15 6BT (GB)
(72) Inventor: WATKINS, Anthony David, Denco Limited, Hereford HR4 9SJ (GB); DUFTON, Michael John, Unigro Limited, Sevenoaks, Kent TN15 6BT (GB)
(74) Representative: Roberts, Mark Peter
(86) International application number: PCT/GB2002/004966
(87) International publication number: WO 2003/037069

(56) References cited:
- GB-A- 1 236 231
- US-A- 3 080 875
- US-A- 3 498 368
- US-A- 4 313 420
- US-A- 4 622 950
- US-A- 4 773 190

## Description

The present invention relates to a growing system for growing various types of produce. More specifically, the invention relates to a growing room for providing a controlled growing environment and a process and apparatus for cooling and/or controlling the atmosphere of the growing room. Various types of growing room have been previously proposed. The function of a growing room is to provide a more controlled environment than would otherwise be available so that produce grown is less at risk of being damaged by the rigours of the environment.

However, previous growing rooms are not ideal for all environmental conditions. For example, a growing room designed to be used in northern Europe will not produce conditions inside ideal for growing when constructed in northern Africa. There is a need, therefore, for a growing room which can be deployed over a greater range of environments. US 3,080,875 discloses the preamble of claim 1.

There is also a need for a growing system in which produce can be grown throughout the year, regardless of the season.

Furthermore, it is desirable that any growing system is energy and water efficient, to reduce the overall cost of the growing procedure and bearing in mind environmental concerns.

There is also a need for novel substrates in which to grow plants and a commercially feasible method of making such a substrate.

There is also a need for a truly organic growing process which uses no pesticides or other toxins at any stage in the process.

The present invention provides in the first aspect a room for providing a controlled environment, the room comprising:
an outer skin of at least partially transparent material;
an inner skin of at least partially transparent material;
wherein said inner skin is supported on the inside of at least one rib member and the outer skin is supported on the outside of said at least one rib member; and
said at least one rib member comprise a hole to allow air in the space between said inner skin and said outer skin to flow from one side of the rib member to the other.

The construction of the main section of the growing room using rib members between the skins and a ridge member supporting each of the rib members has been found to be particularly advantageous in terms of simplicity, strength and ease of maintenance.

The double skin structure also allows means to be provided which circulate air from outside between the two skin layers. This avoids the build up of "hot spots" and helps to maintain an evenly distributed temperature throughout the whole growing room. The holes in the rib members allow this circulation to take place. Further, any condensation which forms between the skins can be collected and used in the cooling process.

Preferably one of the inner and outer skins comprises hollow cells.

The at least partially transparent inner and outer skins and the hollow cell structure allows sunlight to pass through the skins and at the same time effectively insulates the growing room from sudden changes in external temperature to ensure a consistent controlled temperature inside the growing room.

The provision of drains in the floor for collecting excess water allows the water to be recycled by utilising it in the cooling system.

A process for cooling the growing room comprises:
cooling stored water using a chiller;
monitoring the temperature inside the growing room;
passing the cooled water through at least one heat exchanger to extract heat from the air in the growing room when the temperature of the air exceeds a predetermined value.

The process therefore provides that chilled water is used to cool down the growing room when required. The chiller for chilling the water can be operated at night to take advantage of lower electricity costs and the stored water will stay cold for many hours. To improve the ability of the water to stay cold, a phase change material (which freezes at 15°C for example) may be included with the stored water.

Apparatus for cooling a growing room may be provided. The apparatus preferably comprises:
water storage means;
a chiller for cooling water in said water storage means;
at least one heat exchanger for extracting heat from the air in the growing room using cooled water from the water storage means.

The stored water acts as a thermal mass for providing a cooling effect to the growing room in an economical fashion.

The present invention is suitable for growing produce such as fruits and vegetables in a controlled environment which may also be soil-less. The invention allows harvests to be carried out several times a year since the produce is insulated from outdoor seasons.

Typical produce includes strawberries, cherry tomatoes, runner beans, hot chillies, french beans dwarf, okra, F1 hybrid cucumber, peppers, sugar snaps, courgettes, aubergines, herbs, lettuce (leaf), parsley, land cress, mini cauliflower, mini carrots, spring onion, mini broccoli, mini cabbage and spinach. The growing room is of course in no way limited to these specific products though.

Compared to traditional growing in fields, the growing system can produce crops in 30% less time and gives 25 to 30% higher yields. This is due in part to the sealed nature of the room which allows CO₂ to be introduced and for greater than normal concentrations of CO₂ to build up. Further, the system is able to produce crops 52 weeks a year and is compact because it uses more of the vertical dimension of the growing room.

The use of a plurality of independent growing media also provides a further advantage in that should any one growing medium become contaminated, this can be easily dealt with by simply disposing of the infected tube. This reduces the possibility of cross contamination throughout a large area.
The present invention will be further described, by way of example only, with reference to the accompanying drawings, in which:-
Figure 1 shows a perspective view of a growing room with end rooms according to a first aspect of the present invention;
Figure 2 shows a cross sectional view taken along the line A-A in Figure 1 showing detail of the construction of the growing room of the first aspect of the invention;
Figure 3 shows a detailed perspective view of the join between the longitudinal ridge member and the hooped rib members used to support the skins of the growing room;
Figure 4 shows a cross sectional view taken along the line B-B in Figure 1 and shows a detail of the cellular structure of the skin and how the air flows between the two skins;
Figure 5 is a detailed perspective view of a rib member and shows a hole for allowing air flow therethrough;
Figure 6 shows an elongated growing medium;
Figure 7 shows an elongated growing medium having produce planted therein and being hung on a rack in accordance with the present invention;
Figure 8 shows apparatus for sterilising and filling an elongated growing medium according to a third aspect of the present invention;
Figure 9 shows a close up view of a screw conveyor used to convey the material used inside the growing medium; and
Figure 10 shows a schematic diagram of an environment control system.

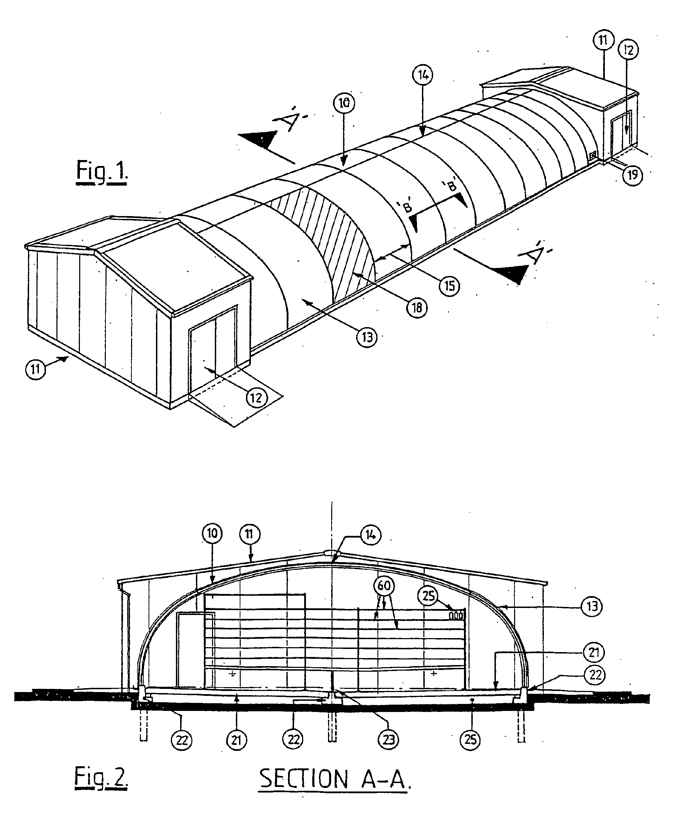

Figure 1 shows a growing room according to the present invention. As can be seen, the growing room (10) itself is located between two end rooms (11), is elongated longitudinally and has a curved cross-sectional outline when viewed in the longitudinal direction. Access to the growing room (10) is via one or both of the end rooms (11) and these end rooms help to ensure that the growing room is well isolated from the outside. That is to say, any personnel must pass through at least two doors (one external door (12) and another internal door which is not shown) to enter the growing room from the outside. This helps to reduce the possibility of contaminants being introduced into the growing room (10).

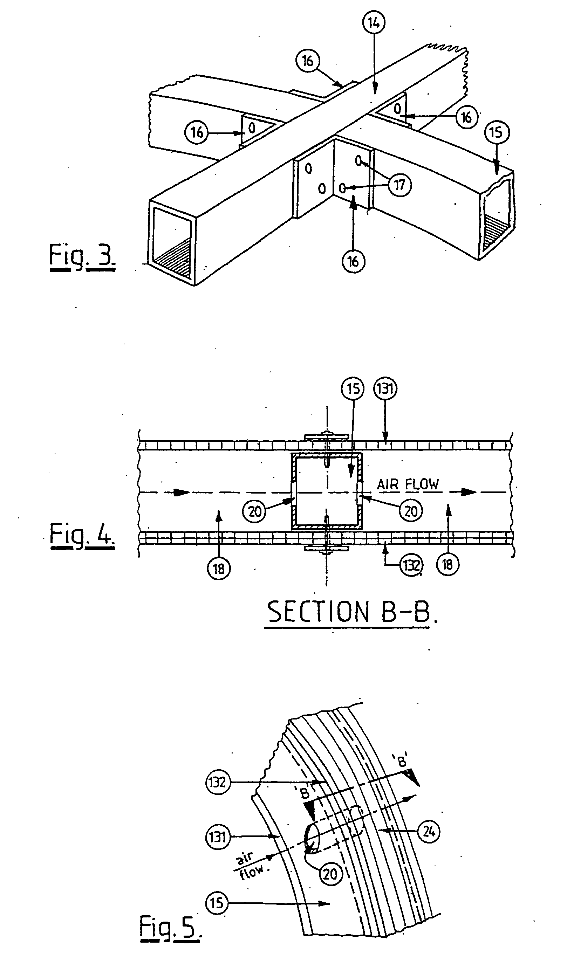

The main growing room area is approximately 400m² and is covered by a roof constructed from sheets (13) of polycarbonate material which are bent in half loops as shown in Figures 1 and 2. The polycarbonate sheets (13) are supported firstly by a central ridge member (14) which runs along the top of the growing room (10) and is attached to the two end rooms (11) and secondly by depending rib members (15) which loop down from the lateral sides of the central ridge member (14) and approach the ground substantially perpendicularly. The attachment of the rib members (15) to the ridge member (14) is shown in Figure 3 where it can be seen that four metal cleated joints (16) are used which are attached to the metal ridge (14) and rib (15) members by screws or bolts (17). Preferably, the ridge and rib members are made from non-corrosive material such as aluminium since this material is relatively strong and light and does not corrode in what can be a humid growing environment. The use of square tube sections for these numbers is preferred since this allows two skins (131 and 132) of polycarbonate material to be attached to the inside and outside of the rib and ridge members respectively as shown in Figures 2 and 4. This creates a series of discrete spaces (18) (one is shaded in Figure 1), each space being bounded by the ridge member (14) two consecutive rib members (15) and the ground.

During use, sunlight is able to pass through the transparent polycarbonate skins (131, 132) so as to reach the produce inside the growing room. At the same time, the sunlight heats the air in the discrete spaces (18). To prevent "hot spots" from building up, the growing room in this preferred embodiment comprises means, such as a fan (19), for circulating air between the two skins. In order that this can be achieved most effectively, the rib members (15) may be provided with one or more holes (20) (see Figure 4) so that air may pass between adjacent discrete sections (18). Similar holes can be provided in the ridge member (14). In this way, only one fan is needed to create a circulatory movement throughout the whole skin structure of the growing room. Further fans may however be used to improve air flow. Also, two fans could be used, one for each lateral side of the growing room, this avoiding the need to have holes in the ridge member (14).

As can be seen in Figure 2, the floor of the growing room is comprised of a series of 250mm thick reinforced concrete planks (21) supported by concrete beams (22). The construction is such that the planks slope inwardly towards a central longitudinal drain (23) for the collection of any run-off water from produce in the growing room (10). The drain (23) supplies the water to a water tank which (as described later) is used for cooling the room. As an alternative, the planks may slope outwardly and two drains may be provided down either side of the room.

The beams (22) may be an L-beam as shown in Figure 2, or part of a ring beam that extends around the perimeter of the tunnel.

As shown in Figure 5, each skin (131,132) of the growing room may comprise a cellular structure such that each skin effectively comprises two layers of polycarbonate material joined together by bridges of polycarbonate material to create cells (24) therebetween. When the cells (24) are disposed to extend in the circumferential direction, this creates thin hoops of air which may be heated by the sun light. These cells are closed such that air cannot flow between them. It has been found particularly advantageous to include a double layer of such cells for the outer skin (132) as shown in Figure 5 since this has been found to provide good insulation while at the same time allowing a large percentage of available light through to the growing room. Furthermore, this construction has been found to provide an even distribution of temperature throughout the growing room (10).

It is not thought to be important whether the inner (131) or outer (132) skin has the double layer cells (24) or whether the cells (24) extend circumferentially or longitudinally. It is preferred for manufacturing purposes that they extend circumferentially however and that the outer skin (132) has the double layer of cells. Typically, the inner (single layer) skin has a total thickness of 7.5mm, the outer (double layer) skin has a thickness of 15mm and the gap therebetween is 90mm.

As shown in Figure 2, insulating material (25) is provided under the decking planks (21) to conserve energy in the room (10) and to help prevent heat from entering the growing room when it is deployed in a hot climate or heat from escaping the growing room when it is deployed in a colder climate. Alternatively or additionally; the space under the decking planks (22) may be used to accommodate environmental control apparatus or cooling materials.

The growing room (10) is preferably well sealed from outside so as to reduce the possibility of contaminants (including biological life forms) from entering the growing room. This is aided by keeping the growing room under positive pressure such that when the door is opened air tends to flow out of the growing room rather than into it. For some research applications, it may be advisable to prevent any matter from exiting the room and in these cases, an internal negative pressure can be provided.

If it is envisaged that the growing room will be used in a very hot and sunny climate, it may be necessary to reduce the intensity of the sunrays reaching the produce to avoid burning. This can be achieved by manufacturing the polycarbonate skin material (one or both layers) with a light reflective or absorbent material contained therein so as to reduce the transmission of light into the growing room. Such material acts in the same manner as sunglasses by reducing the light intensity received inside the growing room. Without such material, approximately 80-90% of available light can reach inside the growing room.

A sodium lighting system is preferably incorporated in the growing room to supplement the natural sunlight during the winter months. Light sensors in the room can be used and when a low PAR (photo-synthetically active radiation) level is detected, the sodium lighting can be activated. The lights are preferably mounted on moveable supports so the position of the sun in the sky can be simulated and extended growth in a particular direction is avoided. Such moveable supports are advantageously combined with the racks that support the elongated growing media (see Figure 2 and later description).

The fact that the growing room is substantially totally sealed from outside allows for atmosphere modification inside the growing room. In particular, the level of Carbon Dioxide inside the room can be boosted artificially. This is carried out using CO₂ tanks under computer control. CO₂ sensors monitor the levels in the room and operate a valve on the tanks to increase the levels if desired for the particular crop(s) in the room. Other gases may also be monitored and topped up in the same way.

Further, it is possible to control humidity in a similar way, independent of temperature, using a humidifier also under the control of a central computer. Some of the factors which it is preferable to monitor and control include:
1. Air temperature
2. Humidity
3. Day length
4. Light intensity
5. Gaseous elements
6. Air circulation velocity
7. Air pressure

The fact that such control is possible opens up the possibility of using the growing room of the present invention for purposes other than growing crops, for example in the pharmaceutical manufacturing industry, phyto-chemical production, neutriceutical production, research into other flora and fauna (eg insects) or other R&D fields which require an enclosed and controlled environment. In short, the room is particularly applicable to the research into, and the growing of, flora and fauna. Also, other types of farming can be carried out in the room, e.g. farming involving livestock or fish farming.

The day length can be controlled using the lighting system to create light during night time and a blind system to create darkness during the daytime. The blind system is preferably located internally to the growing tunnel and is electrically operated such that the blinds can be lowered and raised under computer control. One configuration for the blinds is to have the blind material rolled up and for a motor to unroll and roll up the blinds under computer control. The blind system is particularly useful when darkness is required (e.g. when growing mushrooms) and the blind system may be used in conjunction with the lighting so as to avoid light pollution when the lighting system is used at night. Furthermore, the blind system helps the cooling of the room which is preferable in very hot regions such as the middle east.

As conditions dictate, the blind system can be alternatively placed on the exterior of the growing tunnel in which case care should be taken that it is able to stand the rigours of the outside environment. The blind system also allows control of processes in which light is a stimulus, e.g. in controlling the behaviours of flora and fauna.

For research purposes each room can be partitioned into smaller compartments with up to thirty two such compartments/ chambers. Each compartment/chamber can, if necessary, be provided with independent environmental control units, to facilitate independent climatic simulation, each compartment having the same functionalities as a full scale room. The sealed integrity is maintained within each chamber by creating positive/negative air pressure within the chambers and inter-connecting corridors as required. This means that the room can achieve research security containment levels up to category 2 and 3.

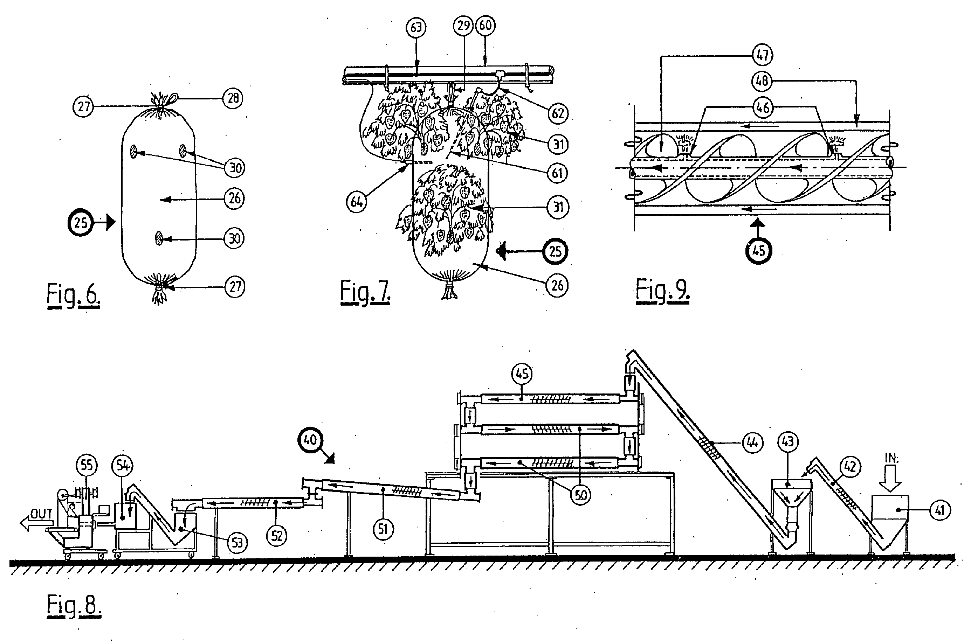

An elongated growing medium (25) is shown in Figure 6 which is easily transportable, is sterile and is able to be easily handled. Further, the growing medium provides a nutritious substrate for growing produce and can be easily recycled.

Each growing medium then has a piece of string (28) attached to one end thereof and is ready to be hung on a support (29) inside the growing room. Holes (30) may then be made in the outer skin (26) of the growing medium (for example four holes in each growing medium) and the plants (31) to be grown can be established in these holes (see Figure 7), their roots extending into the fibrous growing substrate material and their foliage expending outside the growing medium, as shown in Figure 7. The holes can be made after the medium is hung in the room or beforehand. It is advantageous to make the holes beforehand and at the same time inject seed into the holes.

There is now described an apparatus (40), an example of which is shown in Figure 8. The apparatus can be used for manufacturing an elongated growing medium (25) using a continuous flow sterilisation process. The apparatus is designed to sterilise the substrate material used for the growing medium and wrap the sterilised substrate in a tubular skin (26) so as to provide an elongated growing medium. The machine (40) is designed to work continuously to maximise its effectiveness. Furthermore, the apparatus can be used in other applications such as waste decontamination or pasteurisation processes, for example the apparatus can be used effectively in the composting of household waste.

The substrate material used is preferably organic and is preferably non-soil based. However, peat and soil-based materials can be used according to the circumstances. Fibrous materials such as coir have been found to be particularly advantageous. The substrate material may be chosen having regard to the desired produce as well as other factors such as cost. The material may be obtained in briquette form in which case it is pre-processed by crushing the briquettes in a crusher hopper (41) to form a homogenous and flowable mass of material. The crushed material is conveyed to a reception hopper (43) by a screw conveyer (42).

The apparatus comprises a reception hopper (43) into which the flowable substrate material is loaded. The hopper has a capacity suitable for receiving the amount of material that is usually delivered to the machine at any one time. The hopper (43) is attached to a screw conveyor (44) which leads upwards to an initial pre-heat stage. The upward nature of the conveyor (44) allows the later sterilisation chambers to be disposed in the same vertical plane, one above the other, saving space. The pre-heat stage consists of a screw conveyor (45) which runs horizontally and which is designed to add a small amount of moisture to the substrate and heat the material to 110°C to 170°C (preferably140 to 150°C) and apply a pressure of 3 to 10 bar (preferably 8 bar) to the material. The heat and moisture may be applied using steam nozzles (46) positioned on the internal moving thread (47) of the screw conveyor (45). (See Figure 9). Furthermore, extra heat may be provided using a jacket (48) which surrounds the external tube of the screw conveyor. The jacket may be hollow and provided with pressurised steam to heat the material via conduction (as shown in Figure 9) or it could comprise an electric heating element for example.

The substrate material is then conveyed into the main sterilising body (50) of the machine at a rate of approximately 800mm/minute. The successive heating and moisturising chambers add further moisture and heat to the substrate material thereby increasing the weight and volume of the material (and hence the pressure in the chambers). The residence time in this portion of the machine is approximately 20 minutes. During this procedure, the substrate temperature can exceed 200°C which serves to sterilise the substrate and also allows the substrate to be saturated with water such that it reaches its maximum volume and water holding capacity. A lower temperature (eg 150°C may also be used). For pasteurisation applications, the heating step serves to pasteurise the material.

The substrate is then transferred to a cooling stage (again, comprising one or more screw conveyors (51, 52)) where is has a residence time of at least 15 minutes and in which the temperature is reduced from around 200°C to 30°C. The cooling stage is implemented using chilled jackets around the screw conveyor (e.g. by using a construction similar to Figure 9, but using cold water in the hollow jacket).

The material resulting from the machine is sterilised and cooled and is ready to be put into growing skins to create an elongated growing material. To achieve this, the material is fed to a hopper (53) where it is compacted and forced into an extrusion chamber. The material is then extruded into a tubular skin and the ends of the tube are clamped to provide a "sausage"-shaped growing medium. The size of the growing medium is chosen depending on the crop to be grown and the machine allows differently sized tubes of skin to be attached and filled. The tubes of skin are initially stored as a continuous piece of tubing wound on a roller. Furthermore, the machine allows the length of growing medium to be adjusted by adjusting the timing at which the tubing material is cut and clamped.

Once manufactured, the growing media (25) are placed on trolleys and transported to the growing room (10) where they are hung up on the supports (29) ready to receive produce (31) to be grown. Figure 2 shows the racks employed in the growing room. As can be seen, they consist of a series of horizontal suspension rails (60) supported at their ends. Each rail has a plurality of supports (29) for supporting a growing medium. In this way, many thousands (up to 21,000 depending on the type of crop) of growing media may be housed in a single growing room.

The apparatus for manufacturing the elongated growing member is preferably located in its own building adjacent to the growing room(s). A number of separate machines may be located in the same building to increase throughput. It is expected that one building having one machine has the capacity to supply 200 growing rooms with growing media on an ongoing basis, subject to the size of tube and type of crop.

Produce (eg strawberries) may be planted in an elongated growing medium. The elongated growing medium is preferably hung on one of a plurality of supports (29) in the growing room (10) of the present invention. The produce (31) is planted by making a hole in the skin of the elongated growing medium and establishing the produce in the exposed growing substrate material (see Figure 7). The produce is then allowed to grow in the growing room. To assist in this, the growing room is kept at a controlled temperature and humidity and water and other nutrients are fed to the elongated growing medium using a computer controlled dispensing system.

As shown in Figure 7, nutrients can be supplied via a distribution spike (61) which can be pushed through the skin (26) of the growing medium (25). The spike is attached to a branch feed line (62) which is in turn attached to a main feed line (63). Several branch feed lines (62) can be attached to the main feed line (63), one for each growing medium to be supplied with nutrients. Each horizontal suspension rail (60) can have its own branch feed line (63). Further, each rail (60) can support a plurality of moisture sensors (64) which are also spiked so as to be pressed into the growing medium. The moisture sensor is preferably of the potentiometer type and a signal measured is used to determine the flow rate and/or composition of nutrients fed to the growing medium via the distributor (61). There is no need to have a moisture sensor in each growing medium (25) in the room and only a few need be sampled to obtain a reasonable picture of overall moisture levels.

It may also be advantageous to include a PH level sensor together with the moisture sensor so that a more complete picture of the state of the produce can be obtained. The PH level and moisture level can then be used to calculate the exact feed formulation required by the plants and can also be used to determine whether leaching is required to flush the growing substrate of any excessive salt build up.

The water used to water the plants (preferably mixed with nutrients) can be taken from a balancing tank which is filled by rain water. Before watering the plants, such water is filtered to ensure a minimum of contamination. Such balancing tank can preferably take the form of a lake.

Growing is preferably carried out without the use of any pesticides or herbicides and without any fertilisers or growth regulation chemicals or the like. It is preferred that the produce is only fed water and nutrients (mixed in predetermined ratios and supplied via a distribution spike) and pest/weed control is effected by ensuring that the growing room is sealed so that it is difficult for such life forms to enter the growing room.

There is now described an environmental control system particularly suitable for use with the growing room (10) of the first aspect. The process carried out by the system enables the growing room to be cooled and/or dehumidified in an efficient and cost effective manner. Furthermore, the system process helps to conserve water and energy. In a preferred embodiment, the system provides a completely controlled environment due to the control of environmental conditions in the room such as temperature, humidity, pressure, light/dark, gas content etc.

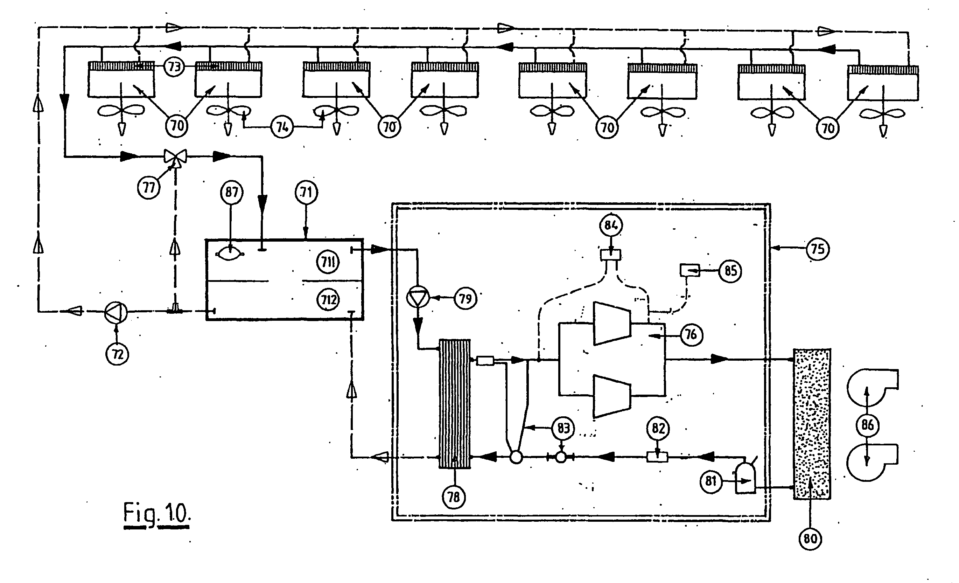

Figure 10 schematically shows the components use to implement the process. A number of cooling units (70) are provided inside the growing room. These units are shown positioned in a straight line in Figure 10, but in practice they would be positioned on the ground along each longitudinal outside edge of the growing room (four along each side). The cooling units (70) are connected to a water storage tank (71) which is designed to hold cooled water. The cooling units (70) extract a flow of cooled water, which is pumped via pump (72) through a coil (73) after which air is blown over the coil by a fan (74). This cools the air which in turn helps to cool the growing room (110). The indoor cooling units (70) have coils (73) in the shape of fins and these fins are coated with a hydrophilic material. This is useful because water tends to condense out of the air onto the coils due to the low temperature of the coils. The hydrophilic material assists the evacuation of the condensate from the coil fins and reduces the amount of possibly stagnant water that could build up on the fins. This in turn reduces the risk of bacteria growth on the fins. This solution is energy efficient since it does not obstruct the air flow from the fan (74).

The water in the tank (71) is chilled by a chiller unit (75) which preferably comprises tandem scroll compressors (76). The tank (71) is divided into two sections (711 and 712) although the division is not complete so it is possible for water to flow between the two sections, albeit in a restricted fashion. Water is taken from one section (711) of the tank, is chilled by the chiller unit (75) and is supplied back to the other section (712) of the tank. The water for supplying the cooling units (70) is taken from the section (712) of the tank to which the cooled water is supplied and is put back in the first section (711) of the tank which supplies the chiller (75). In this way, the cooling units (70) are always supplied with the coldest water in the tank (71). The dividing baffle in the water tank (71) is preferably located in a vertical orientation (Figure 10 shows a horizontal orientation) with the gap in the baffle being at the bottom of the tank. The baffle in this orientation allows mixing of the water in the bottom of the tank and maintains the same water level on either side. It prevents rapid cycling of the chiller unit and helps to provide a stable water temperature at all times. A mixing valve (77) is used so that the cooling units (70) may be bypassed for maintenance purposes.

The chiller unit (75) comprises an evaporator (78) which receives water from the tank (71) via a pump (79). The water passes through the evaporator and is cooled by a flow of refrigerant (preferably R20) in the evaporator. The tandem compressors (76) drive the refrigerant through the refrigeration cycle past a condenser (80), a relief valve (81), an expansion valve (82) and various other valves and flow paths (83) as shown in Figure 10. A safety switch (84) and fan control (85) is also provided in the chiller unit to ensure safe operation. The condensing action of the condenser (80) is supplemented by heat extraction fans (86) which expel heat to the outside atmosphere.

Preferably, the process of cooling the water in the tank (71) is carried out at a different time to the process of using the cooling units (70). Thus, for example, the chiller (75) can be used at night time when electricity is less expensive to cool the water in the tank. Then, during the day, the cooling units (70) are switched on and use the pre-cooled water from the tank (71). In times of high demand (e.g. particularly hot days), it may be necessary to use the chiller (75) at the same time as the cooling units (70) but the system should preferably be designed such that chilling usually occurs during the night and the cooled water is available for use during the next day. The water in the tank (71) therefore acts in the manner of a "thermal mass".

To maximise the potential cooling ability of the water in the tank, phase change material may be put into the tank in discrete pouches (87). The pouches (87) of phase change material are designed to freeze at a temperature above the freezing point of water, eg 15 °C. Thus, at 15°C, the latent heat of solidification is removed from the phase change material. This increases the cooling power of the system as a whole without increasing the size of the tank. Theoretically, in order to warm the water to a temperature above 15°C, each of the phase change material pouches must be completed melted. This requires more energy than is required to simply heat the water and also ensures that the water tank remains at a lower and more stable temperature for longer. The storage capacity at off peak electrical loads is effectively increased for use during the peak cooling loads.

The cooling units can be switched on in response to a closed loop control system wherein the temperature in the atmosphere in the growing room or other environmental conditions are used as control variables. The cooling units are thus switched on, for example, when the temperature rises above a predetermined value and switched off when the temperature falls below a (lower) predetermined value. The predetermined values are selected in accordance with the growth requirements for a specified current or future period.

The tandem compressors (76) in the chiller (75) may both be used at the same time or on their own. The decision as to whether to use both compressors is made based on the temperature of the water stored at the tank (71). If the water is very warm, then both compressors are used to ensure that the water is chilled enough during the night. If the water is already cool, a lower load is required meaning that only one of the compressors need be used. The use of two compressors in parallel instead of one effectively doubles the mass flow rate of refrigerant through the chiller and thus doubles the cooling effect on the water in the evaporator.

Some heating capacity can be provided by passing the system water through the refrigerant gas heat exchanger upon request. This has the effect of using heat from the refrigeration compressors at the same time that the tank is cooled and heat is being removed from the phase change material.

The use of the system shown in Figure 10 allows simple component changes to take place so that the system can be quickly and easily modified for use in different climates.

The various aspects of the invention described above are intended to be preferably used together to form a complete growing system. Thus, it is envisaged that produce is grown using the growing medium described in the growing room described, the growing medium being manufactured in the way described and the growing room being cooled in the way described. Such produce will be of high quality and will be economical to produce. The advantageous construction of the growing room also means that it is relatively easy and inexpensive to deploy and disassemble if required. This serves to give the construction a residual value.

## Claims

1. A room (10) for providing a controlled environment, the room (10) comprising:
an outer skin (132) of at least partially transparent material;
an inner skin (131) of at least partially transparent material;
wherein said inner skin (131) is supported on the inside of at least one rib member (15) and the outer skin (132) is supported on the outside of said at least one rib member (15); and **characterised in that**:
said at least one rib member (15) comprises a hole (20) to allow air in the space (18) between said inner skin and said outer skin to flow from one side of the rib member to the other.

2. A room according to claim 1, wherein said room is a growing room (10).

3. A room according to claim 1 or 2, wherein one of said inner (131) and outer (132) skins comprise hollow cells (24).

4. A room according to claim 3, wherein both said inner (131) and outer (132) skins comprise hollow cells (24).

5. A room according to any one of the preceding claims, wherein said outer (132) skin comprises a double layer of hollow cells (24).

6. A room according to anyone of the preceding claims, wherein the inside of the room is substantially sealed from the outside.

7. A room according to any one of the preceding claims, wherein said at least one rib member (15) supports a ridge member (14) which runs longitudinally along the top of the room.

8. A room according to any one of the preceding claims, wherein said at least one rib member (15) is supported at ground level by a longitudinal edge beam (22).

9. A room according to claim 8, wherein said edge beam (22) also supports at least one floor member (21).

10. A room according to claim 9, wherein said floor member (21) slopes inwardly towards the centre of the growing room or slopes outwardly towards the perimeter of the growing room.

11. A room according to claim 9 or 10, wherein there is provided an insulated space underneath said floor member (21).

12. A room according any one of the preceding claims, wherein said inner skin (131) substantially seals the room interior from the space between said inner skin (131) and said outer skin (132).

13. A room according to any one of the preceding claims, further comprising at least one fan (19) for supplying air from outside the growing room to the space between said inner skin (131) and said outer skin (132).

14. A room according to any one of the preceding claims, wherein said inner and outer skins (131,132) comprise a polycarbonate material.

15. A room according to claim 3, or any one of the preceding claims when appendant to claim 3, wherein said hollow cells (24) extend in a direction substantially perpendicularly from the ground.

16. A room according to any one of the preceding claims, wherein the air pressure inside the room exceeds the air pressure outside.

17. A room according to any one of the preceding claims, wherein said outer (132) and/or inner skin (131) comprises a light reflective or absorbent material so as to reduce the transmission of solar energy into the growing room.

18. A room according to any one of the preceding claims, further comprising water storage means (10).

19. A room according to claim 18, further comprising drains in the floor for collecting water, said drains supplying water to said water storage means (10).

20. A room according to claim 18 or 19, further comprising a cooler (70) for cooling the water in said water storage means (10).

21. A room according to claim 18, 19 or 20, further comprising one or more heat exchangers (72,73,74) for cooling the air inside the growing room using cooled water in said water storage means (10).

22. A room according to claim 21 when appendant to claim 20, in which said water storage means (10) is divided into two parts (711,712) such that flow between the two parts is restricted but not prevented, one part being used to receive cooled water from said cooler and supply water to said at least one heat exchanger and the other part being used to receive water from said at least one heat exchanger and supply water to said cooler.

23. A room according to claim 20 or 22, wherein said cooler (70) comprises at least two compressors (76) in parallel and is arranged such that one or more can be switched off when less chilling is required.

24. A room according to any one of claims 18 to 23, wherein said water storage means (10) contains discrete self-contained masses of phase change material (87) which freeze at a temperature higher than the temperature at which the water in the water storage means freezes.

25. A room according to any one of the preceding claims, further comprising a series of supports (29), each for hanging an elongated growing medium (25) on.

26. A room according to claim 25, further comprising a plurality of elongated growing media (25) hung on respective supports (29) of said series.

27. A room according to claim 26, further comprising at least one water sensor (64) embedded in an elongated growing media for determining the water content of said growing media.

28. A room according to claim 27, further comprising water supply means (61) for supplying each elongated growing media with water.

29. A room according to claim 28, further comprising a controller for causing said water supply means to supply water in response to a signal from said water sensor.

30. A room according to any of claims 26 to 29, wherein said elongated growing media (25) comprise a biodegradable tubular skin containing a growing substrate material.

31. A room according to any one of the preceding claims, further comprising non-transparent end corridors at each longitudinal end of the room (10).

32. A network of growing rooms, each room (10) being constructed according to any one of the preceding claims, the rooms sharing common end corridors.

## Patentansprüche

1. Raum (10) zur Bereitstellung einer kontrollierten Umgebung, wobei der Raum (10) beinhaltet:
eine Außenhaut (132) aus mindestens teilweise transparentem Material;
eine Innenhaut (131) aus mindestens teilweise transparentem Material;
wobei die Innenhaut (131) auf der Innenseite von mindestens einem Rippenelement (15) getragen wird und die Außenhaut (132) auf der Außenseite des mindestens einem Rippenelements (15) getragen wird; und **dadurch gekennzeichnet, dass**
das mindestens eine Rippenelement (15) ein Loch (20) beinhaltet, um Luft in dem Raum (18) zwischen der Innenhaut und der Außenhaut von einer Seite des Rippenelements zu der anderen fließen zu lassen.

2. Raum nach Anspruch 1, wobei der Raum ein wachsender Raum (10) ist.

3. Raum nach Anspruch 1 oder 2, wobei eine von der Innenhaut (131) und Außenhaut (132) hohle Zellen (24) beinhaltet.

4. Raum nach Anspruch 3, wobei sowohl die Innenhaut (131) als auch die Außenhaut (132) hohle Zellen (24) beinhaltet.

5. Raum nach einem der vorhergehenden Ansprüche, wobei die Außenhaut (132) eine Doppelschicht von hohlen Zellen (24) beinhaltet.

6. Raum nach einem der vorhergehenden Ansprüche, wobei die Innenseite des Raums im Wesentlichen von der Außenseite abgeschlossen ist.

7. Raum nach einem der vorhergehenden Ansprüche, wobei das mindestens eine Rippenelement (15) ein Stegelement (14) trägt, das entlang des Deckels des Raums verläuft.

8. Raum nach einem der vorhergehenden Ansprüche, wobei das mindestens eine Rippenelement (15) auf Bodenniveau von einen longitudinalen Randträger (22) getragen wird.

9. Raum nach Anspruch 8, wobei der Randträger (22) auch mindestens ein Bodenelement (21) trägt.

10. Raum nach Anspruch 9, wobei sich das Bodenelement (21) nach innen in Richtung des Mittelpunktes des wachsenden Raums oder nach außen in Richtung des Durchmesser des wachsenden Raumes neigt.

11. Raum nach Anspruch 9 oder 10, wobei ein isolierter Raum unter dem Bodenelement (21) vorgesehen ist.

12. Raum nach einem der vorhergehenden Ansprüche, wobei die Innenhaut (131) im Wesentlichen das Rauminnere von dem Raum zwischen der Innenhaut (131) und der Außenhaut (132) abschließt.

13. Raum nach einem der vorhergehenden Ansprüche, der weiterhin mindestens einen Ventilator (19) zum Zuführen von Luft von der Außenseite des wachsenden Raums in den Raum zwischen Innenhaut (131) und Außenhaut (132) beinhaltet.

14. Raum nach einem der vorhergehenden Ansprüche, wobei die Innen- und Außenhaut (131, 132) ein Polycarbonatmaterial beinhaltet.

15. Raum nach Anspruch 3 oder nach einem der vorhergehenden Ansprüche, sofern ein Unteranspruch zu Anspruch 3, wobei sich die hohlen Zellen (24) in einer Richtung im Wesentlichen senkrecht vom Boden aus erstrecken.

16. Raum nach einem der vorhergehenden Ansprüche, wobei der Luftdruck im Inneren des Raums den Luftdruck außen übersteigt.

17. Raum nach einem der vorhergehenden Ansprüche, wobei die äußere (132) und/oder innere Haut (131) ein lichtreflektierendes oder lichtabsorbierendes Material beinhaltet, sodass die Transmission von Solarenergie in dem wachsenden Raum reduziert wird.

18. Raum nach einem der vorhergehenden Ansprüche, der weiterhin Wasserspeichereinrichtung (10) beinhaltet.

19. Raum nach Anspruch 18, der weiterhin Ableitungskanäle im Boden zum Sammeln von Wasser beinhaltet, wobei die Abläufe der Wasserspeichereinrichtung (10) Wasser zuführen.

20. Raum nach Anspruch 18 oder 19, der weiterhin einen Kühler (70) zum Kühlen des Wassers in der Wasserspeichereinrichtung (10) beinhaltet.

21. Raum nach Anspruch, 18, 19 oder 20, der weiterhin einen oder mehrere Wärmeaustauscher (72, 73, 74) zum Kühlen der Luft im Inneren des wachsenden Raumes unter Verwendung von Kühlwasser in der Wasserspeichereinrichtung (10) beinhaltet.

22. Raum nach Anspruch 21, sofern Unteranspruch zu Anspruch 20, wobei die Wasserspeichereinrichtung (10) in zwei Teile (711, 712) aufgeteilt ist, derart, dass der Fluss zwischen den beiden Teilen eingeschränkt, jedoch nicht verhindert ist, wobei ein Teil zum Empfang von Kühlwasser aus dem Kühler und zur Wasserversorgung des mindestens einen Wärmeaustauschers verwendet wird und der andere Teil zum Empfang von Wasser aus dem mindestens einem Wärmeaustauscher und zur Wasserversorgung des Kühlers verwendet wird.

23. Raum nach Anspruch 20 oder 22, wobei der Kühler (70) mindestens zwei Kompressoren (76) parallel beinhaltet und so angeordnet ist, dass einer oder mehrere abgeschaltet werden können, wenn weniger Kühlen erforderlich ist.

24. Raum nach einem der Ansprüche 18 bis 23, wobei die Wasserspeichereinrichtung (10) diskrete, in sich abgeschlossene Massen von Phasenänderungsmaterial (87) enthält, welches bei einer Temperatur gefriert, die höher ist als die Temperatur, bei der das Wasser in der Wasserspeichereinrichtung gefriert.

25. Raum nach einem der vorhergehenden Ansprüche, der weiterhin eine Reihe von Trägem (29) jeweils zum Aufhängen eines länglichen wachsenden Mediums (25) beinhaltet.

26. Raum nach Anspruch 25, der weiterhin eine Vielzahl von länglichen Wachstumsmedien (25) beinhaltet, die an jeweiligen Trägem (29) der Reihe aufgehängt sind.

27. Raum nach Anspruch 26, der weiterhin mindestens einen Wassersensor (64) beinhaltet, der in ein längliches wachsendes Medium zum Bestimmen des Wassergehaltes des wachsenden Mediums eingebettet ist.

28. Raum nach Anspruch 27, der weiterhin Wasserzufuhreinrichtung (61) zur Versorgung jedes länglichen wachsenden Mediums mit Wasser beinhaltet.

29. Raum nach Anspruch 28, der weiterhin einen Kontroller beinhaltet, um die Wasserversorgungseinrichtung zur Zufuhr von Wasser als Reaktion auf ein Signal aus dem Wassersensor zu veranlassen.

30. Raum nach einem der Ansprüche 26 bis 29, wobei das längliche wachsende Medium (25) eine biologisch abbaubare röhrenförmige Haut beinhaltet, die ein wachsendes Substratmaterial enthält.

31. Raum nach einem der vorhergehenden Ansprüche, der weiterhin nicht transparente Endkorridore an jedem Längsende des Raumes (10) beinhaltet.

32. Netzwerk aus wachsenden Räumen, wobei jeder Raum (10) nach einem der vorhergehenden Ansprüche konstruiert ist, wobei den Räumen Endkorridore gemeinsam sind.

## Revendications

1. Chambre (10) pour fournir un environnement maîtrisé, la chambre (10) comprenant :
une enveloppe extérieure (132) en matériau au moins partiellement transparent ;
une enveloppe intérieure (131) en matériau au moins partiellement transparent ;
dans laquelle ladite enveloppe intérieure (131) est supportée sur le côté intérieur d'au moins un élément de nervure (15) et l'enveloppe extérieure (132) est supportée sur le côté extérieur dudit au moins un élément de nervure (15) ; et **caractérisée en ce que** :
ledit au moins un élément de nervure (15) comprend un trou (20) pour permettre à l'air se trouvant dans l'espace (18) situé entre ladite enveloppe intérieure et ladite enveloppe extérieure de circuler d'un côté à l'autre de l'élément de nervure.

2. Chambre selon la revendication 1, dans laquelle ladite chambre est une chambre de culture (10).

3. Chambre selon la revendication 1 ou 2, dans laquelle l'une desdites enveloppes intérieure (131) et extérieure (132) comprend des cellules creuses (24).

4. Chambre selon la revendication 3, dans laquelle les deux enveloppes, intérieure (131) et extérieure (132), comprennent des cellules creuses (24).

5. Chambre selon l'une quelconque des revendications précédentes, dans laquelle ladite enveloppe extérieure (132) comprend une double couche de cellules creuses (24).

6. Chambre selon l'une quelconque des revendications précédentes, dans laquelle l'intérieur de la chambre est substantiellement hermétique par rapport à l'extérieur.

7. Chambre selon l'une quelconque des revendications précédentes, dans laquelle ledit au moins un élément de nervure (15) supporte un élément de faîtage (14) qui est présent longitudinalement le long du sommet de la chambre.

8. Chambre selon l'une quelconque des revendications précédentes, dans laquelle ledit au moins un élément de nervure (15) est supporté au niveau du sol par une poutre de bord longitudinal (22).

9. Chambre selon la revendication 8, dans laquelle ladite poutre de bord (22) supporte aussi au moins un élément de sol (21).

10. Chambre selon la revendication 9, dans laquelle ledit élément de sol (21) est incliné vers l'intérieur, vers le centre de la chambre de culture, ou bien est incliné vers l'extérieur, vers le périmètre de la chambre de culture.

11. Chambre selon la revendication 9 ou 10, dans laquelle est prévu un espace isolé sous ledit élément de sol (21).

12. Chambre selon l'une quelconque des revendications précédentes, dans laquelle ladite enveloppe intérieure (131) rend substantiellement étanche l'intérieur de la chambre par rapport à l'espace situé entre ladite enveloppe intérieure (131) et ladite enveloppe extérieure (132).

13. Chambre selon l'une quelconque des revendications précédentes, comprenant en outre au moins un ventilateur (19) pour envoyer de l'air de l'extérieur de la chambre de culture à l'espace situé entre ladite enveloppe intérieure (131) et ladite enveloppe extérieure (132).

14. Chambre selon l'une quelconque des revendications précédentes, dans laquelle lesdites enveloppes intérieure et extérieure (131, 132) comprennent un matériau de type polycarbonate.

15. Chambre selon la revendication 3, ou selon l'une quelconque des revendications précédentes lorsqu'elles dépendent de la revendication 3, dans laquelle lesdites cellules creuses (24) s'étendent dans une direction substantiellement perpendiculaire depuis le sol.

16. Chambre selon l'une quelconque des revendications précédentes, dans laquelle la pression d'air régnant à l'intérieur de la chambre dépasse la pression d'air extérieure.

17. Chambre selon l'une quelconque des revendications précédentes, dans laquelle ladite enveloppe extérieure (132) et/ou intérieure (131) comprend un matériau réfléchissant ou absorbant la lumière afin de réduire la transmission d'énergie solaire dans la chambre de culture.

18. Chambre selon l'une quelconque des revendications précédentes, comprenant en outre un moyen de stockage d'eau (10).

19. Chambre selon la revendication 18, comprenant en outre des drains dans le sol pour collecter l'eau, lesdits drains fournissant de l'eau audit moyen de stockage d'eau (10).

20. Chambre selon la revendication 18 ou 19, comprenant en outre un (70) pour refroidir l'eau présente dans ledit moyen de stockage d'eau (10).

21. Chambre selon la revendication 18, 19 ou 20, comprenant en outre un ou plusieurs échangeurs de chaleur (72, 73, 74) pour refroidir l'air présent à l'intérieur de la chambre de culture en utilisant l'eau refroidie dudit moyen de stockage d'eau (10).

22. Chambre selon la revendication 21 lorsqu'elle dépend de la revendication 20, dans laquelle ledit moyen de stockage d'eau (10) est divisé en deux parties (711, 712) de telle manière que l'écoulement entre les deux parties est limité mais pas empêché, une partie étant utilisée pour recevoir de l'eau froide dudit dispositif de refroidissement et fournir de l'eau audit au moins un échangeur de chaleur et l'autre partie étant utilisée pour recevoir de l'eau dudit au moins un échangeur de chaleur et fournir de l'eau audit dispositif de refroidissement.

23. Chambre selon la revendication 20 ou 22, dans laquelle ledit dispositif de refroidissement (70) comprend au moins deux compresseurs (76) en parallèle et est adapté de telle façon qu'un ou plus peut être arrêté lorsqu'il y a besoin de moins de refroidissement.

24. Chambre selon l'une quelconque des revendications 18 à 23,
dans laquelle ledit moyen de stockage d'eau (10) contient des masses autonomes discrètes de matériau à changement de phase (87) qui gèlent à une température supérieure à la température à laquelle gèle l'eau présente dans le moyen de stockage d'eau.

25. Chambre selon l'une quelconque des revendications précédentes, comprenant en outre une série de supports (29), chacun permettant de suspendre un milieu de culture allongé (25).

26. Chambre selon la revendication 25, comprenant en outre une pluralité de milieux de culture allongés (25) suspendus à des supports respectifs (29) de ladite série.

27. Chambre selon la revendication 26, comprenant en outre au moins un capteur d'eau (64) incorporé dans un milieu de culture allongé pour déterminer la teneur en eau dudit milieu de culture.

28. Chambre selon la revendication 27, comprenant en outre un moyen d'alimentation en eau (61) pour fournir de l'eau à chaque milieu de culture allongé.

29. Chambre selon la revendication 28, comprenant en outre un contrôleur pour faire fournir de l'eau par ledit moyen d'alimentation en eau en réponse à un signal provenant dudit capteur d'eau.

30. Chambre selon l'une quelconque des revendications 26 à 29,
dans laquelle lesdits milieux de culture allongés (25) comprennent une enveloppe tubulaire biodégradable contenant un matériau formant substrat de culture.

31. Chambre selon l'une quelconque des revendications précédentes, comprenant en outre des corridors d'extrémité non transparents à chaque extrémité longitudinale de la chambre (10).

32. Réseau de chambres de culture, chaque chambre (10) étant construite selon l'une quelconque des revendications précédentes, les chambres partageant des corridors d'extrémité communs.
